# EUROPEAN PATENT SPECIFICATION

(11) **EP 3 383 610 B1**
(45) Date of publication and mention of the grant of the patent: **19.05.2021**
(21) Application number: 16713346.1
(22) Date of filing: 18.03.2016
(51) Int. Cl.: B29C 64/20, B33Y 30/00, B33Y 40/00

(54) **MONITORING DELIVERY OF BUILD MATERIAL IN ADDITIVE MANUFACTURING SYSTEMS**
ÜBERWACHUNG DER BEREITSTELLUNG VON BAUMATERIAL IN SYSTEMEN ZUR GENERATIVEN FERTIGUNG
SURVEILLANCE DE L'ADMINISTRATION D'UN MATÉRIAU DE CONSTRUCTION DANS DES SYSTÈMES DE FABRICATION ADDITIVE

(43) Date of publication of application: 10.10.2018
(73) Proprietor: Hewlett-Packard Development Company, L.P., Spring TX 77389 (US)
(72) Inventor: VILAJOSANA, Xavier, 08174 Sant Cugat del Valles (ES); CORTES, Sebastia, 08174 Sant Cugat del Valles (ES); DOMINGUEZ, Pablo, 08174 Sant Cugat del Valles (ES)
(74) Representative: Franks, Adam Peter
(86) International application number: PCT/EP2016/056055
(87) International publication number: WO 2017/157475

(56) References cited:
- EP-A2- 1 700 686

## Description

### BACKGROUND

Additive manufacturing systems that generate three-dimensional objects, including those commonly referred to as "3D printers", have been proposed as a potentially convenient way to produce three-dimensional objects. These systems may receive a definition of the three-dimensional object in the form of an object model. This object model is processed to instruct the system to produce the object using one or more material components. This may be performed on a layer-by-layer basis. The processing of the object model may vary based on the type of system and/or the production technology being implemented. European patent application EP1700686 describes a method and apparatus for forming three-dimensional objects by laser sintering that includes use of dense phase pneumatic conveying.

### BRIEF DESCRIPTION OF THE DRAWINGS

Various features of the present disclosure will be apparent from the detailed description which follows, taken in conjunction with the accompanying drawings, which together illustrate certain example features, and wherein:
Figure 1 is a schematic diagram showing components of an additive manufacturing system according to certain examples;
Figure 2 is a schematic illustration of a printbed area with an object being printed on a printbed according to certain examples;
Figure 3 is an illustration of a thermal image of a printbed while printing according to certain examples;
Figure 4 is a flowchart showing operations performed in an additive manufacturing system according to certain examples;
Figure 5 is a flowchart showing a method for use in an additive manufacturing system according to certain examples; and
Figure 6 is a schematic illustration of a processing device according to certain examples.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

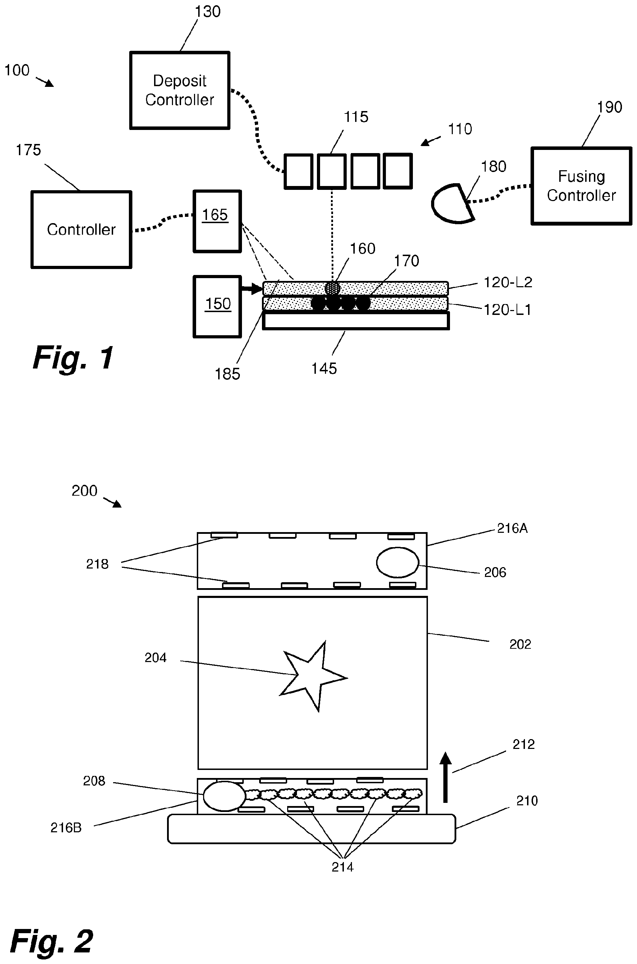

Figure 1 shows an example of an additive manufacturing system 100 that uses an inkjet deposit mechanism 110 to print a plurality of liquid agents onto layers of a powdered (or slurry, paste, gel, etc.) build material (or 'substrate', 'powder' or 'build powder').

In Figure 1, the inkjet deposit or print mechanism 110 implements a deposit mechanism. The deposit mechanism 110 in this example comprises four printheads, such as inkjet printheads, 115, although the number of printheads may differ. Examples may involve use of scanning printhead systems and/or page-wide array systems. Each printhead is adapted to deposit an agent onto a powdered build material 120. In particular, each printhead is arranged to deposit a particular agent upon defined areas within a plurality of successive build material layers. An agent may for example act as a coalescing agent (e.g. an energy absorber or fusing agent) or as a coalescing modifier agent (or detailing agent). In Figure 1, the inkjet print mechanism 110 is communicatively coupled to a deposit controller 130. Further components, may be present but are not shown for clarity.

In Figure 1, the additive manufacturing system 100 comprises a build material supply mechanism 150 to supply at least one build material layer upon which the plurality of agents are deposited by the deposit mechanism 110. In this example, the build material supply mechanism 150 comprises a powdered build material supply mechanism to supply successive layers of build material. Two example layers are shown in Figure 1: a first layer 120-L1 upon which a second layer 120-L2 has been deposited by the build material supply mechanism 150. Build material supply mechanism 150 may for example deliver build material from one or more build material storage buckets (not shown) underneath the printbed.

In certain cases, the build material supply mechanism 150 is arranged to move relative to the platen 145 such that successive layers are deposited on top of each other. In certain cases, the build material supply mechanism 150 comprises one or more moving platforms. In certain cases, the build material supply mechanism 150 comprises one or more Archimedes' screws.

In the present example, the additive manufacturing system also comprises a fixing system 180 arranged to apply energy to form portions of the three-dimensional object from combinations of the agents and the build material. For example, Figure 1 shows a particular printhead 115 depositing a controlled amount of a liquid agent onto an addressable area of the second layer 120-L2 of build material. The print data may be based on an object model, such that the amount and location of liquid agent applied to the layer of build material is based on the object model.

In some examples, fixing system 180 comprises an energy source such as one or more ultra-violet or infra-red light sources, e.g. fusing lamps or lasers. In some examples, fixing system 180 comprises a fusing controller 190 for controlling the fusing process, including controlling the power applied by a fusing energy source such as one or more fusing lamps or lasers. Fusing agent may act as an energy absorber such that regions of build material to which fusing agent is applied absorb sufficient fusing energy to exceed the crystallization temperature of the build material and thus fuse. Layer 120-L2 is built on top of lower layer 120-L1. In examples, fusing occurs between layers as well as within layers such that the region 145 of layer 120-L2 to which fusing agent is applied fuses with adjacent region 150 of layer 120-L1 to which fusing agent was applied.

Additive manufacturing system 100 also comprises thermal imaging apparatus 165, for example one or more thermo-cameras (for example infra-red (IR) thermo-cameras). Thermal imaging apparatus 165 uses thermal imaging techniques to measure temperatures on/around the printbed area. In certain examples, thermal imaging apparatus 165 measures temperatures of build material delivery elements, such as build material delivery element 185. In some examples, the build material delivery element comprises a mechanism that forms a layer of build material on a build platform.

Additive manufacturing system also comprises a controller 175 for controlling thermal imaging apparatus 165 and processes associated with build material delivery which are described below.

Figure 2 is a schematic illustration of a printbed area 200 with an object 204 being printed on a printbed 202 according to certain examples.

During the printing of a 3D part, layers are built successively by printing 2D cross-sections of the part under construction, fusing it and covering the print bed surface with new build material. The covering process is carried out by a moving carriage 210 referred to as a recoater which spreads the material over printbed 202. In one example, the recoater uses a roll or a blade to move build material orthogonally (in the direction of arrow 212 or opposite to the direction of arrow 212) to the printing axis in order to cover the printbed surface with a thin layer of build material. The build material to be moved is accumulated by a build material supply mechanism, for example build material supply mechanism 150 of Figure 1.

In the examples of Figure 2, build material supply mechanism 150 comprises two build material delivery receptacles 216A and 216B, at either end of printbed 202. Receptacles 216A and 216B hold build material delivered by the build material supply mechanism 150 before the build material is spread across printbed 202 after the melting phase occurs. Receptacle 216A contains a number of vibrators and/or heaters 218 for spreading and heating build material respectively; receptacle 216B similarly contains a number of vibrators and/or heaters.

The build material (e.g., polyamide powder) is stored in one or more build material storage buckets (not shown) underneath the printbed.

In some examples, build material supply mechanism 150 comprises one or more Archimedes screws (not shown). In such examples, build material is pumped up to the sides of the printbed using the one or more Archimedes screws to be stored in receptacles 216A, 216B at the same level of the printbed. The one or more Archimedes screws pump build material from the bucket(s) to receptacles 216A, 216B on the sides of the printbed. In some examples, one Archimedes screw delivers build material to receptacle 216A and another Archimedes' screw delivers build material to receptacle 216B.

In some examples, build material supply mechanism 150 comprises one or more moving platforms (not shown). In such examples, the build material is delivered to the sides of the printbed using the one or more moving platforms. In some examples, one moving platform delivers build material to receptacle 216A and another moving platform delivers build material to receptacle 216B.

In certain examples, build material is expulsed by build material supply mechanism 150 through one or more build material delivery elements 206, 208 (for example build material delivery holes) and leveled by vibration of elements 218 over the build material delivery platform.

In certain examples, one or more vane elements (not shown) create piles 214 of build material on the build material delivery platform before spreading by recoater 210. The one or more vanes may for example take the form of one or more hinged doors which open and close to create piles 214 of build material.

Certain examples include measures for detecting insufficient build material delivery from build material supply mechanism 150. Certain examples enable the detection of malfunctioning of one or more parts of build material supply mechanism 150 such as Archimedes screw or moving platform parts. Certain examples enable detection of when build material in the bucket(s) has been consumed and/or is depleted.

Certain examples described herein introduce measures to detect non-intrusively when the bucket(s) runs out of build material. Known systems involve human inspection in such detection.

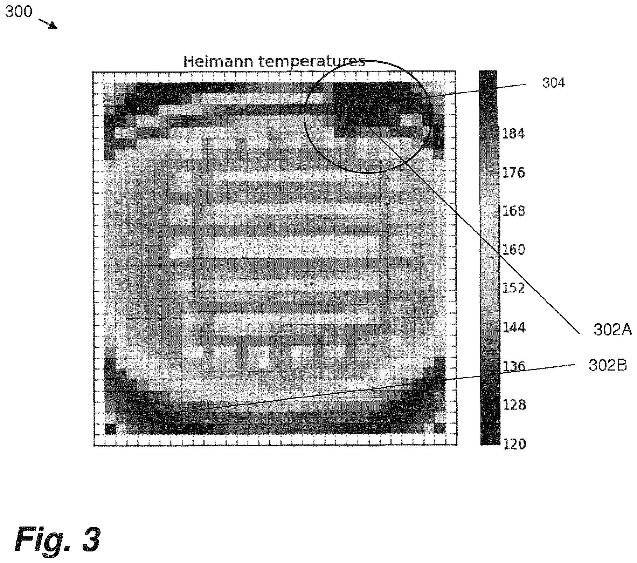

Figure 3 is an illustration of a thermal image 300 of a printbed while printing according to certain examples. Image 300 may, for example, have been captured by thermal imaging apparatus 165. Image 300 covers two build material delivery areas 302A and 302B, one or more of which might correspond to build material delivery element 185 of Figure 1.

Item 304 of Figure 3 indicates an empty build material delivery hole. This is an indication that the build material supply mechanism 150 is not delivering any or sufficient build material to build material delivery area 304. One cause of this could be that build material supply mechanism 150 is not functioning correctly, for example an Archimedes' screw or moving platform part thereof is not functioning correctly. Another cause of this could be that an associated build material storage bucket is out of build material.

Certain examples comprise mechanisms by which the thermal imaging apparatus 165 is used to monitor one or more build material delivery holes. The mechanism makes use of the fact that it is known that a surface (for example metallic surface) of a build material delivery hole has a different emissivity than that of the build material and the thermo-camera is able to unequivocally detect when a build material delivery hole is not covered by build material.

In certain examples, controller 175 processes information provided by the thermo-camera continuously to monitor the temperature of the printbed. In certain examples, controller 175 controls the energy delivered to the top heating lamps in order to maintain a stable printbed temperature. In certain examples, controller 175 has information about the exact position of the build material delivery hole(s) on the side(s) of the printbed.

In certain examples, controller 175 analyzes the build material delivery hole areas after each recoater pass and determines if a hole is detected. In certain examples, build material delivery hole detection is based on a gradient analysis of the pixels in that area. In certain examples, a contour or edge detection algorithm is employed in the gradient analysis.

In certain examples, when a build material delivery hole or an uncovered part of a build material delivery hole appears, an abrupt temperature difference is perceived along the contour of the build material delivery hole or uncovered part thereof in the surroundings of the build material source.

Certain example uses edge detection algorithms (for example edge detection using gradient operators) to determine the border of the build material delivery hole. In certain examples, if a build material delivery hole is detected, other subsystems/controllers, for example an Archimedes' screw controller and/or a build material delivery subsystem controller, are notified. In response to such notification(s) those other subsystems/controllers can verify the proper operation of the motor encoders and actuate accordingly by forcing the delivery of the build material or eventually stopping the print process due to an out of build material detection scenario.

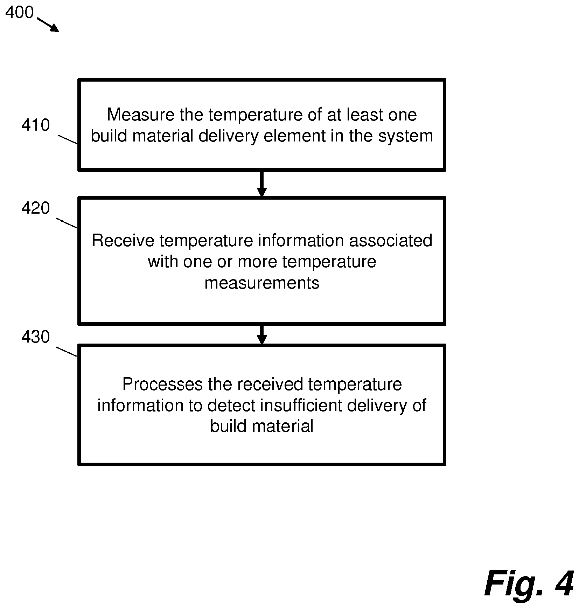

Figure 4 is a flowchart 400 showing operations performed in an additive manufacturing system according to certain examples.

At block 410, a thermal camera measures the temperature of at least one build material delivery element in the system.

At block 420, a controller receives, from the thermal camera, temperature information associated with one or more temperature measurements of the at least one build material delivery element.

At block 430, the controller processes the received temperature information to detect insufficient delivery of build material via the at least one build material delivery element.

In certain examples, the at least one build material delivery element has a different emissivity than that of the build material; in such examples, the processing comprises processing the received temperature information for an indication of the different emissivity.

According to examples, an indication of the different emissivity indicates that at least a portion of the at least one build material delivery element is not covered by build material.

In certain examples, the processing comprises performing a gradient analysis of pixels within a predetermined distance of the at least one build material delivery element.

In certain examples, performing the gradient analysis comprises using a contour or edge detection algorithm to detect one or more known characteristics of the at least one build material delivery element.

In certain examples, the at least one build material delivery element comprises at least one substrate delivery hole.

In certain examples, the additive manufacturing system comprises a build material supply mechanism comprising one or more Archimedes screws to deliver build material via the at least one build material delivery hole. In some examples, the at least one build material delivery element comprises at least one substrate delivery hole, and the one or more known characteristics comprise a shape or dimension of the at least one substrate delivery hole.

In certain examples, the additive manufacturing system comprises a build material supply mechanism comprising one or more moving platforms to deliver build material via the at least one build material delivery element.

In certain examples, the additive manufacturing system comprises a substrate delivery controller; in such examples, in response to detecting insufficient delivery of build material via the at least one build material delivery element, the controller notifies the substrate delivery controller.

In certain examples, the thermal camera measures the temperature of the at least one build material delivery element during additive manufacturing of an object by the additive manufacturing system; in such example, in response to detecting insufficient delivery of build material via the at least one build material delivery element, the controller initiates stopping of the additive manufacturing of the object by the additive manufacturing system.

In certain examples, the thermal camera measures the temperature of the at least one build material delivery element on the basis of predetermined information indicating a location of the at least one build material delivery element in a printbed area of the additive manufacturing system. In such examples, the build material delivery element in a printbed area controller has prior knowledge of where the build material delivery elements are in the printbed area.

In certain examples, the thermal camera measures the temperature of one or more other elements in a printbed area of the system in addition to the at least one build material delivery element; in such examples, the controller receives temperature information associated with temperature measurements of the one or more other elements and processes the received temperature information to distinguish between temperature information associated with the one or more other elements and the at least one build material delivery element in order to detect insufficient delivery of build material via the at least one build material delivery element. In such examples, the build material delivery element in a printbed area controller does not have prior knowledge of where the build material delivery elements are in the printbed area, so processes thermal imaging information in order to locate the build material delivery elements.

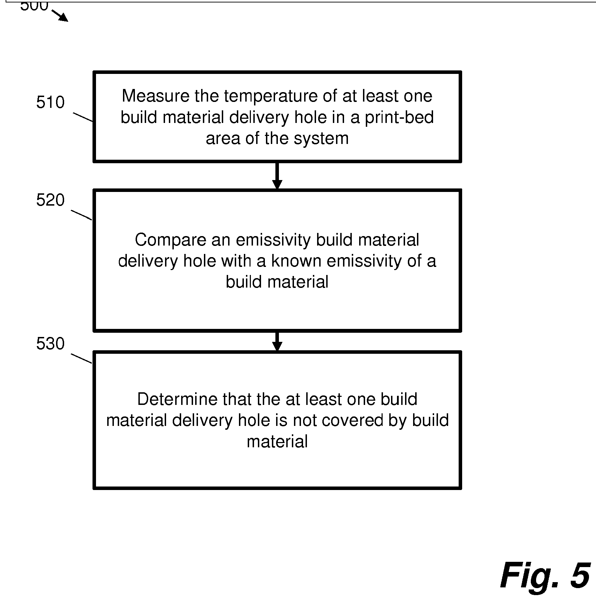

Figure 5 is a flowchart showing a method 500 for use in an additive manufacturing system according to certain examples.

At block 510, the temperature of at least one build material delivery hole in a printbed area of the system is measured.

At block 520, an emissivity of the at least one build material delivery hole at the measured temperature is compared with a known emissivity of a build material being used in additive manufacturing by the system at the measured temperature.

At block 530, in response to the comparison indicating a difference in emissivity, it is determined that at least a portion of the at least one build material delivery hole is not covered by build material.

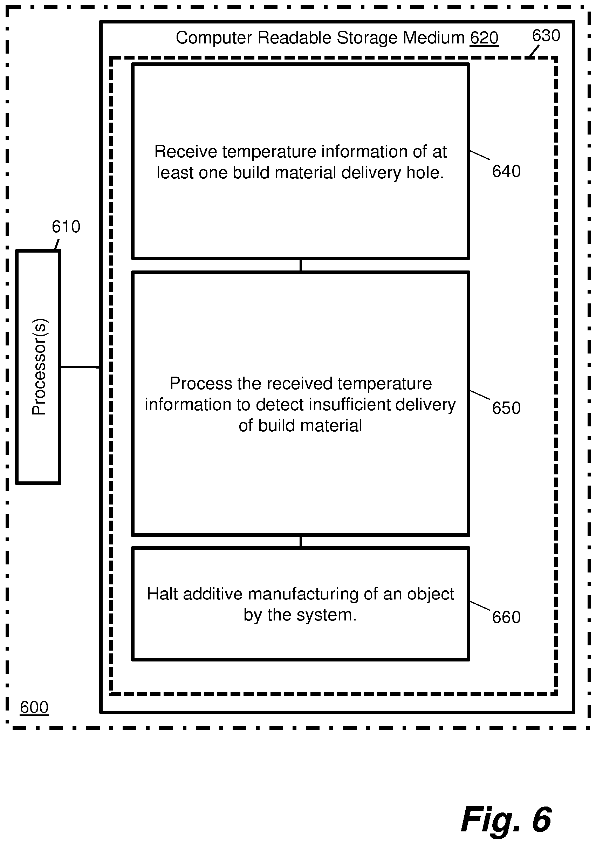

Certain system components and methods described herein may be implemented by way of machine readable instructions that are storable on a non-transitory storage medium. Figure 6 shows an example of a three-dimensional printing system or device 600 comprising at least one processor 610 arranged to retrieve data from a computer-readable storage medium 620. The computer-readable storage medium 620 comprises a set of computer-readable instructions 630 stored thereon. The at least one processor 610 is configured to load the instructions 630 into memory for processing. The instructions 630 are arranged to cause the at least one processor 610 to perform a series of actions.

Instruction 640 is configured to cause processor(s) 610 to receive temperature information associated with one or more temperature measurements of at least one build material delivery hole. The at least one build material delivery hole has a different emissivity than that of a build material being used in additive manufacturing by the system.

Instruction 650 is configured to cause processor(s) 610 to process the received temperature information to detect insufficient delivery of build material via the at least one build material delivery hole. The processing comprises processing the received temperature information for an indication of the different emissivity. An indication of the different emissivity indicates that at least a portion of the at least one build material delivery hole is not covered by build material

Instruction 660 is configured to cause processor(s) 610 to, in response to detecting insufficient delivery of build material via the at least one build material delivery hole, halt additive manufacturing of an object by the system.

The non-transitory storage medium can be any media that can contain, store, or maintain programs and data for use by or in connection with an instruction execution system. Machine-readable media can comprise any one of many physical media such as, for example, electronic, magnetic, optical, electromagnetic, or semiconductor media. More specific examples of suitable machine-readable media include, but are not limited to, a hard drive, a random access memory (RAM), a read-only memory (ROM), an erasable programmable read-only memory, or a portable disc.

Certain examples improve additive manufacturing by providing automatic out of build material detection with no human intervention.

Certain examples improve additive manufacturing by avoiding uncontrolled printing without enough build material.

Certain examples improve additive manufacturing by enabling quick actuation and build material refilling whilst being able to pause the process and not having to discard whole buckets of build material.

Certain examples comprise an additive manufacturing system, the system comprising a thermal camera to measure the temperature of at least one build material delivery element in the system, and a controller to receive, from the thermal camera, temperature information associated with one or more temperature measurements of the at least one build material delivery element, and process the received temperature information to detect incorrect delivery of build material via the at least one build material delivery element. In addition to enabling detection of insufficient delivery of build material, such examples enable detection of over delivery of build material, for example if a layer is too thick on one or more areas.

The preceding description has been presented to illustrate and describe examples of the principles described. This description is not intended to be exhaustive or to limit these principles to any precise form disclosed. Many modifications and variations are possible in light of the above teaching provided they fall within the scope of the appended claims.

## Claims

1. An additive manufacturing system (100), the system comprising:
a thermal camera (165) to measure the temperature of at least one build material delivery element in the system; and
a controller (175) to:
receive (420), from the thermal camera, temperature information associated with one or more temperature measurements of the at least one build material delivery element; and
process (430) the received temperature information to detect insufficient delivery of build material via the at least one build material delivery element.

2. The system of claim 1, wherein the at least one build material delivery element has a different emissivity than that of the build material, and
wherein the processing comprises processing the received temperature information for an indication of the different emissivity.

3. The system of claim 2, wherein an indication of the different emissivity indicates that at least a portion of the at least one build material delivery element is not covered by build material.

4. The system of claim 1, wherein the processing comprises performing a gradient analysis of pixels within a predetermined distance of the at least one build material delivery element.

5. The system of claim 4, wherein performing the gradient analysis comprises using a contour or edge detection algorithm to detect one or more known characteristics of the at least one build material delivery element.

6. The system of claim 1, wherein the at least one build material delivery element comprises at least one substrate delivery hole.

7. The system of claim 6, wherein the system comprises a build material supply mechanism comprising one or more Archimedes screws to deliver build material via the at least one build material delivery hole.

8. The system of claim 5, wherein the at least one build material delivery element comprises at least one substrate delivery hole, and
wherein the one or more known characteristics comprise a shape or dimension of the at least one substrate delivery hole.

9. The system of claim 1, wherein the system comprises a build material supply mechanism comprising one or more moving platforms to deliver build material via the at least one build material delivery element.

10. The system of claim 1, wherein the system comprises a substrate delivery controller,
the controller to, in response to detecting insufficient delivery of build material via the at least one build material delivery element, notify the substrate delivery controller.

11. The system of claim 1, wherein the thermal camera measures the temperature of the at least one build material delivery element during additive manufacturing of an object by the system,
the controller to, in response to detecting insufficient delivery of build material via the at least one build material delivery element, initiate stopping of the additive manufacturing of the object by the system.

12. The system of claim 1, wherein the thermal camera measures the temperature of the at least one build material delivery element on the basis of predetermined information indicating a location of the at least one build material delivery element in a printbed area of the system.

13. The system of claim 1, wherein the thermal camera measures the temperature of one or more other elements in a printbed area of the system in addition to the at least one build material delivery element,
wherein the controller receives temperature information associated with temperature measurements of the one or more other elements, and
wherein the controller processes the received temperature information to distinguish between temperature information associated with the one or more other elements and the at least one build material delivery element in order to detect insufficient delivery of build material via the at least one build material delivery element.

14. A method for use in an additive manufacturing system, the method comprising:
measuring (510) the temperature of at least one build material delivery hole in a printbed area of the system;
comparing (520) an emissivity of the at least one build material delivery hole at the measured temperature with a known emissivity of a build material being used in additive manufacturing by the system at the measured temperature; and
in response to the comparison indicating (530) a difference in emissivity, determining that at least a portion of the at least one build material delivery hole is not covered by build material.

15. A non-transitory computer-readable storage medium storing instructions that, if executed by a processor of a three-dimensional printing system, cause the processor to:
receive temperature information associated with one or more temperature measurements of at least one build material delivery hole, wherein the at least one build material delivery hole has a different emissivity than that of a build material being used in additive manufacturing by the system;
process the received temperature information to detect insufficient delivery of build material via the at least one build material delivery hole, the processing comprising processing the received temperature information for an indication of the different emissivity, an indication of the different emissivity indicating that at least a portion of the at least one build material delivery hole is not covered by build material; and
in response to detecting insufficient delivery of build material via the at least one build material delivery hole, halt additive manufacturing of an object by the system.

## Patentansprüche

1. Additives Fertigungssystem (100), wobei das System Folgendes umfasst:
eine Wärmebildkamera (165), um die Temperatur wenigstens eines Baumaterialabgabeelements in dem System zu messen; und
eine Steuerung (175) für Folgendes:
Empfangen (420), von der Wärmebildkamera, von Temperaturinformationen, die einer oder mehreren Temperaturmessungen des wenigstens einen Baumaterialabgabeelements zugeordnet sind; und
Verarbeiten (430) der empfangenen Temperaturinformationen, um eine unzureichende Abgabe von Baumaterial über das wenigstens eine Baumaterialabgabeelement zu erfassen.

2. System nach Anspruch 1, wobei das wenigstens eine Baumaterialabgabeelement einen anderen Emissionsgrad als das Baumaterial aufweist, und
wobei das Verarbeiten das Verarbeiten der empfangenen Temperaturinformationen für eine Anzeige des unterschiedlichen Emissionsgrades umfasst.

3. System nach Anspruch 2, wobei eine Anzeige des unterschiedlichen Emissionsgrads anzeigt, dass wenigstens ein Teil des wenigstens einen Baumaterialabgabeelements nicht mit Baumaterial bedeckt ist.

4. System nach Anspruch 1, wobei das Verarbeiten ein Durchführen einer Gradientenanalyse von Pixeln innerhalb eines zuvor bestimmten Abstands des wenigstens einen Baumaterialabgabeelements umfasst.

5. System nach Anspruch 4, wobei das Durchführen der Gradientenanalyse ein Verwenden eines Kontur- oder Kantenerfassungsalgorithmus umfasst, um ein oder mehrere bekannte Merkmale des wenigstens einen Baumaterialabgabeelements zu erfassen.

6. System nach Anspruch 1, wobei das wenigstens eine Baumaterialabgabeelement wenigstens ein Substratabgabeloch umfasst.

7. System nach Anspruch 6, wobei das System einen Baumaterialversorgungsmechanismus umfasst, der eine oder mehrere archimedische Schrauben umfasst, um Baumaterial über das wenigstens eine Baumaterialabgabeloch abzugeben.

8. System nach Anspruch 5, wobei das wenigstens eine Baumaterialabgabeelement wenigstens ein Substratabgabeloch umfasst und
wobei das eine oder die mehreren bekannten Merkmale eine Form oder Abmessung des wenigstens einen Substratabgabelochs umfassen.

9. System nach Anspruch 1, wobei das System einen Baumaterialversorgungsmechanismus umfasst, der eine oder mehrere bewegliche Plattformen umfasst, um Baumaterial über das wenigstens eine Baumaterialabgabeelement abzugeben.

10. System nach Anspruch 1, wobei das System eine Substratabgabesteuerung umfasst,
wobei die Steuerung als Reaktion auf das Erfassen einer unzureichenden Abgabe von Baumaterial über das wenigstens eine Baumaterialabgabeelement die Substratabgabesteuerung benachrichtigt.

11. System nach Anspruch 1, wobei die Wärmebildkamera die Temperatur des wenigstens einen Baumaterialabgabeelements während der additiven Fertigung eines Objekts durch das System misst,
wobei die Steuerung als Reaktion auf das Erfassen einer unzureichenden Abgabe von Baumaterial über das wenigstens eine Baumaterialabgabeelement ein Anhalten der additiven Fertigung des Objekts durch das System einleitet.

12. System nach Anspruch 1, wobei die Wärmebildkamera die Temperatur des wenigstens einen Baumaterialabgabeelements auf der Basis von zuvor bestimmten Informationen misst, die einen Ort des wenigstens einen Baumaterialabgabeelements in einem Druckbettbereich des Systems anzeigen.

13. System nach Anspruch 1, wobei die Wärmebildkamera die Temperatur eines oder mehrerer anderer Elemente in einem Druckbettbereich des Systems zusätzlich zu dem wenigstens einen Baumaterialabgabeelement misst,
wobei die Steuerung Temperaturinformationen empfängt, die den Temperaturmessungen des einen oder der mehreren anderen Elemente zugeordnet sind, und
wobei die Steuerung die empfangenen Temperaturinformationen verarbeitet, um zwischen Temperaturinformationen, die dem einen oder den mehreren anderen Elementen zugeordnet sind, und dem wenigstens einen Baumaterialabgabeelement zu unterscheiden, um eine unzureichende Abgabe von Baumaterial über das wenigstens eine Baumaterialabgabeelement zu erfassen.

14. Verfahren zur Verwendung in einem additiven Fertigungssystem, wobei das Verfahren Folgendes umfasst:
Messen (510) der Temperatur wenigstens eines Baumaterialabgabelochs in einem Druckbettbereich des Systems;
Vergleichen (520) eines Emissionsgrads des wenigstens einen Baumaterialabgabelochs bei der gemessenen Temperatur mit einem bekannten Emissionsgrad eines Baumaterials, das bei der additiven Fertigung durch das System bei der gemessenen Temperatur verwendet wird; und
als Reaktion auf den Vergleich, der einen Unterschied im Emissionsgrad anzeigt (530), Bestimmen, dass wenigstens ein Teil des wenigstens einen Baumaterialabgabelochs nicht mit Baumaterial bedeckt ist.

15. Nicht flüchtiges computerlesbares Speichermedium, das Anweisungen speichert, die, wenn sie durch einen Prozessor eines 3D-Drucksystems ausgeführt werden, den Prozessor zu Folgendem veranlassen:
Empfangen von Temperaturinformationen, die einer oder mehreren Temperaturmessungen wenigstens eines Baumaterialabgabelochs zugeordnet sind, wobei das wenigstens eine Baumaterialabgabeloch einen anderen Emissionsgrad als ein Baumaterial aufweist, das bei der additiven Fertigung durch das System verwendet wird;
Verarbeiten der empfangenen Temperaturinformationen, um eine unzureichende Abgabe von Baumaterial über das wenigstens eine Baumaterialabgabeloch zu erfassen, wobei das Verarbeiten das Verarbeiten der empfangenen Temperaturinformationen für eine Anzeige des unterschiedlichen Emissionsgrads umfasst, wobei eine Anzeige des unterschiedlichen Emissionsgrads anzeigt, dass wenigstens ein Teil des wenigstens einen Baumaterialabgabelochs nicht mit Baumaterial bedeckt ist; und
als Reaktion auf das Erfassen einer unzureichenden Abgabe von Baumaterial über das wenigstens eine Baumaterialabgabelock, Anhalten der additiven Fertigung eines Objekts durch das System.

## Revendications

1. Système de fabrication additive (100), le système comprenant :
une caméra thermique (165) pour mesurer la température d'au moins un élément de distribution de matériau de construction dans le système ; et
un dispositif de commande (175) pour :
recevoir (420), en provenance de la caméra thermique, des informations de température associées à une ou plusieurs mesures de température de l'au moins un élément de distribution de matériau de construction ; et
traiter (430) les informations de température reçues afin de détecter une distribution insuffisante de matériau de construction par l'intermédiaire de l'au moins un élément de distribution de matériau de construction.

2. Système selon la revendication 1, l'au moins un élément de distribution de matériau de construction ayant une émissivité différente de celle du matériau de construction, et
le traitement comprenant le traitement des informations de température reçues pour une indication de l'émissivité différente.

3. Système selon la revendication 2, une indication de l'émissivité différente indiquant qu'au moins une partie de l'au moins un élément de distribution de matériau de construction n'est pas recouverte par le matériau de construction.

4. Système selon la revendication 1, le traitement comprenant la réalisation d'une analyse de gradient de pixels à l'intérieur d'une distance prédéterminée de l'au moins un élément de distribution de matériau de construction.

5. Système selon la revendication 4, la réalisation de l'analyse de gradient comprenant l'utilisation d'un algorithme de détection de contour ou de bord pour détecter une ou plusieurs caractéristiques connues de l'au moins un élément de distribution de matériau de construction.

6. Système selon la revendication 1, l'au moins un élément de distribution de matériau de construction comprenant au moins un orifice de distribution de substrat.

7. Système selon la revendication 6, le système comprenant un mécanisme d'alimentation en matériau de construction comprenant une ou plusieurs vis d'Archimède pour distribuer du matériau de construction par l'intermédiaire de l'au moins un orifice de distribution de matériau de construction.

8. Système selon la revendication 5, l'au moins un élément de distribution de matériau de construction comprenant au moins un orifice de distribution de substrat, et
la ou les caractéristiques connues comprenant une forme ou une dimension de l'au moins un orifice de distribution de substrat.

9. Système selon la revendication 1, le système comprenant un mécanisme d'alimentation en matériau de construction comprenant une ou plusieurs plateformes mobiles pour distribuer le matériau de construction par l'intermédiaire de l'au moins un élément de distribution de matériau de construction.

10. Système selon la revendication 1, le système comprenant un dispositif de commande de distribution de substrat,
le dispositif de commande devant, en réponse à la détection d'une distribution insuffisante de matériau de construction par l'intermédiaire de l'au moins un élément de distribution de matériau de construction, avertir le dispositif de commande de distribution de substrat.

11. Système selon la revendication 1, la caméra thermique mesurant la température de l'au moins un élément de distribution de matériau de construction pendant la fabrication additive d'un objet par le système,
le dispositif de commande devant, en réponse à la détection d'une distribution insuffisante de matériau de construction par l'intermédiaire de l'au moins un élément de distribution de matériau de construction, lancer l'arrêt de la fabrication additive de l'objet par le système.

12. Système selon la revendication 1, la caméra thermique mesurant la température de l'au moins un élément de distribution de matériau de construction sur la base d'informations prédéterminées indiquant un emplacement de l'au moins un élément de distribution de matériau de construction dans une zone de lit d'impression du système.

13. Système selon la revendication 1, la caméra thermique mesurant la température du ou des autres éléments dans une zone de lit d'impression du système en plus de l'au moins un élément de distribution de matériau de construction,
le dispositif de commande recevant des informations de température associées aux mesures de température de l'un ou des autres éléments, et
le dispositif de commande traitant les informations de température reçues pour distinguer les informations de température associées au ou aux autres éléments et l'au moins un élément de distribution de matériau de construction afin de détecter une distribution insuffisante de matériau de construction par l'intermédiaire de l'au moins un élément de distribution de matériau de construction.

14. Procédé destiné à être utilisé dans un dispositif de fabrication additive comprenant :
la mesure (510) de la température d'au moins un orifice de distribution de matériau de construction dans une zone de lit d'impression du système ;
la comparaison (520) d'une émissivité de l'au moins un orifice de distribution de matériau de construction à la température mesurée avec une émissivité connue d'un matériau de construction utilisé dans la fabrication additive par le système à la température mesurée ; et
en réponse à l'indication (530) de la comparaison d'une différence d'émissivité, la détermination du fait qu'au moins une partie de l'au moins un orifice de distribution de matériau de construction n'est pas recouverte par le matériau de construction.

15. Support de stockage lisible par ordinateur non transitoire stockant des instructions qui, si elles sont exécutées par un processeur d'un système d'impression tridimensionnelle, amènent le processeur à :
recevoir des informations de température associées à une ou plusieurs mesures de température d'au moins un orifice de distribution de matériau de construction, l'au moins un orifice de distribution de matériau de construction ayant une émissivité différente de celle d'un matériau de construction utilisé dans la fabrication additive par le système ;
traiter les informations de température reçues pour détecter une distribution insuffisante de matériau de construction par l'intermédiaire de l'au moins un orifice de distribution de matériau de construction, le traitement comprenant le traitement des informations de température reçues pour une indication de l'émissivité différente, une indication de l'émissivité différente indiquant qu'au moins une partie de l'au moins un orifice de distribution de matériau de construction n'est pas recouverte par du matériau de construction ; et à,
en réponse à la détection d'une distribution insuffisante de matériau de construction par l'intermédiaire de l'au moins un orifice de distribution de matériau de construction, arrêter la fabrication additive d'un objet par le système.
